Europäisches Patentamt

European Patent Office

Office européen des brevets

(19)

(11) EP 1 398 843 A2

(12) **EUROPEAN PATENT APPLICATION**

(43) Date of publication:
**17.03.2004 Bulletin 2004/12**

(51) Int Cl.⁷: **H01M 8/06**, H01M 8/04

(21) Application number: **03020109.9**

(22) Date of filing: **04.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **11.09.2002 JP 2002265254**

(71) Applicant: **Nissan Motor Co., Ltd.
Yokohama-shi, Kanagawa (JP)**

(72) Inventor: **Haga, Fumihiro
Zuschi-shi, Kanagawa (JP)**

(74) Representative: **Schaeberle, Steffen
Hoefer & Partner,
Patentanwälte,
Gabriel-Max-Strasse 29
81545 München (DE)**

(54) **Fuel cell system**

(57)     A fuel cell system has a reformer (1), a fuel cell stack (2) for generating power by supplying reformate gas, a combustor (3) for combusting combustible gas, a passage (41) for connecting the reformer (1) and the fuel cell stack (2), a passage (42) for connecting the fuel cell stack (2) and the combustor (3), and a gas passage (4) connecting the combustor (3) and the reformer (1). When the power generation of the fuel cell stack is stopped, supply of fuel and water/ air to the reformer (1) is stopped and combustion gas from the combustor (3) is circulated to the system via the gas passage (4) connecting the combustor (3) and the reformer (1) and the reformer (1).

FIG. 1

EP 1 398 843 A2

**Description**

FIELD OF THE INVENTION

This invention relates to a fuel cell system comprising a reformer producing reformate gas and a fuel cell stack using the reformate gas.

BACKGROUND OF THE INVENTION

In a fuel cell system having a reformer, there is residual moisture, hydrogen and unreformed fuel in the reformer after the system has been shut down. As a result, the moisture adheres to the surface of the reforming catalyst in the reformer and has an adverse effect on the performance of the reforming catalyst. On the other hand, in a reformer using partial oxidation, since oxygen is used in reforming operations, the reforming catalyst becomes oxidized after the system has been shut down.

A technique is known for preventing oxidization of the reforming catalyst and adhesion of water to the surface of the reforming catalyst. Tokkai-Sho 63-44934 published by the Japanese Patent Office in 1988 discloses a technique of drying the surface of the reforming catalyst and removing oxygen from the reformer by prolonged purging with nitrogen. The fuel cell system is shut down after the prolonged purging operation. Furthermore this technique requires a device supplying hydrogen gas to the reformer to reduce the oxidized reforming catalyst.

Further a prior art technique disclosed in Tokkai 2000-36314 published by the Japanese Patent Office in 2000 uses a blower to allow a flow of the residual gas in the reformer and a cooler to remove water vapor from the residual gas.

SUMMARY OF THE INVENTION

However the prior art technique disclosed in Tokkai-Sho 63-44934 is not suitable for use in vehicle-mounted fuel cell systems as it requires a nitrogen cylinder and a hydrogen cylinder. The prior art technique disclosed in Tokkai 2000-36314 requires a structure having extremely air-tight characteristics for the reformer due to the residual hydrogen in the reformer after the operation of the fuel cell system is stopped.

It is therefore an object of this invention to prevent a reduction in the catalytic performance of the reformer after the fuel cell system is shut down without using a device supplying hydrogen or nitrogen to purge the reformer.

In order to achieve the above object, this invention provides a fuel cell system having a reformer for generating a reformate gas containing hydrogen from fuel and water/air, a fuel cell stack for generating electric power as a result of supply of reformate gas, a combustor for combusting combustible gas introduced into the combustor, a passage for connecting the reformer and the fuel cell stack, and a passage for connecting the fuel cell stack and the combustor. The fuel cell system comprises a recirculation passage connecting the reformer and the combustor so as to allow a flow of the gas discharged from the combustor to the reformer; a recirculation device for recirculating gas discharged from the combustor through the recirculation passage and the reformer; a supply device for controlling a supply of fuel and water/ air to the reformer; a device for selecting an operation mode of the fuel cell system from a group including a normal operation mode in which the fuel cell stack performs power generation and a stop mode in which the fuel cell stack does not perform power generation; and a controller for controlling the supply device and the recirculation device in response to the operation mode of the fuel cell system. The controller functions to control the supply device to stop the supply of fuel and water/air to the reformer in the stop mode; and subsequently control the recirculation device to recirculate the discharged gas from the combustor through the recirculation passage and the reformer.

Further, this invention provides a control method for controlling a fuel cell system, the fuel cell system having a reformer for generating a reformate gas containing hydrogen from fuel and water/ air, a fuel cell stack for generating electric power as a result of supply of reformate gas, a combustor for combusting combustible gas introduced into the combustor, a passage for connecting the reformer and the fuel cell stack, a passage for connecting the fuel cell stack and the combustor, and a recirculation device for recirculating gas discharged from the combustor through the recirculation passage and the reformer. The method comprises the steps of selecting an operation mode of the fuel cell system from a group including a normal operation mode in which the fuel cell stack performs power generation and a stop mode in which the fuel cell stack does not perform power generation; and stopping the supply of fuel and water/air to the reformer in the stop mode; and subsequently recirculating the discharged gas from the combustor through the recirculation passage and the reformer.

The details as well as other features and advantages of this invention are set forth in the remainder of the specification and are shown in the accompanying drawings.

BRIEF DESCRIPTION OF THE DRAWINGS

FIG. 1 is a schematic diagram of a fuel cell system showing a first embodiment of the invention.
FIG. 2 is a schematic diagram of a fuel cell system showing a second embodiment of the invention.
FIG. 3 is a schematic diagram of a control device for a fuel cell system as shown in FIG. 2.
FIG. 4 is a flowchart showing a control routine executed by a controller as shown in FIG. 2.
FIG. 5 is a schematic diagram of a fuel cell system showing a third embodiment of the invention.

## DESCRIPTION OF THE PREFERRED EMBODIMENTS

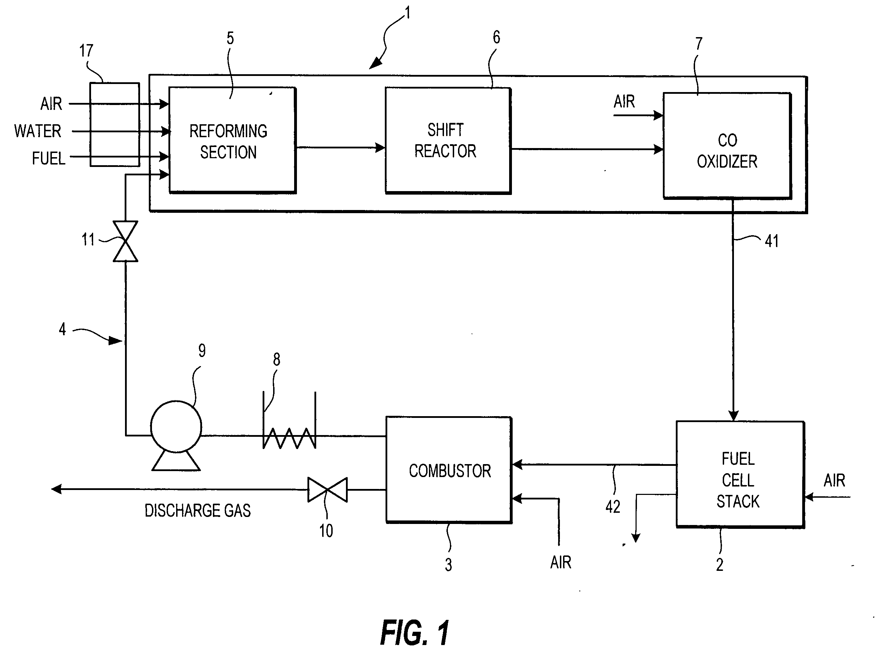

Referring to FIG. 1, a first embodiment will be described. In FIG. 1, a fuel cell system comprises a reformer 1 which generates a reformate gas bearing hydrogen from air and/or water and a fuel such as a hydrocarbon, a fuel cell stack 2 for generating power using the reformate gas and air, a combustor 3 for combusting unused hydrogen discharged from the fuel cell stack 2, and a recirculation passage 4 for supplying discharge gas from the combustor 3 to the reformer 1.

The reformer 1 is provided with a reforming section 5, a shift reactor 6 and a carbon monoxide selective oxidizer 7. The reforming section 5 is supplied with air and/or water and fuel to generate reformate gas. The resulting reformate gas flows into the shift reactor 6. The shift reactor 6 produces hydrogen and carbon dioxide ($CO_2$) by reacting water and carbon monoxide (CO) in the reformate gas to remove CO. Thereafter the reformate gas flows into the carbon monoxide selective oxidizer 7. The carbon monoxide selective oxidizer 7 oxidizes residual carbon monoxide in the reformate gas using supplied air to remove CO. The resulting reformate gas flows into the fuel cell stack 2 through a passage 41 connecting the reformer 1 and the fuel cell stack 2.

The fuel cell stack 2 is supplied with air and reformate gas from the carbon monoxide selective reactor 7 in the reformer 1 and generates electrical power using electrochemical reactions between hydrogen and oxygen. The discharged gas from the fuel cell stack 2 containing unused hydrogen is supplied to the combustor 3 through the passage 42 connecting the combustor 3 and the fuel cell stack 2. Discharge air is discharged from the fuel cell stack 2 to the outside without modification. The combustor 3 performs combustion of unused hydrogen from the fuel cell stack 2 using air. A discharge valve 10 is provided in the discharge line allowing discharge gas (in other words, combustion gas) to flow from the combustor 3 to the outside. The discharge valve 10 is closed when the fuel cell 2 is not generating power and is open when the fuel cell stack 2 is generating power. When the discharge valve 10 in the discharge line is closed, the gas discharged from the combustor 3 is supplied to the recirculation passage 4 which allows the flow of the gas discharged from the combustor 3 to the reformer 1. In this manner, the gas discharged from the combustor 3 becomes recirculation gas which is circulated in the gas passage in the fuel cell system from the combustor 3 through the reformer 1.

The recirculation passage 4 connects the inlet of the reforming section 5 of the reformer 1 and the outlet of the combustor 3 and supplies discharge gas from the combustor 3 to the reforming section 5 when power generation in the fuel cell stack 2 is stopped. A circulation control valve 11, a recirculation blower 9 and a cooler 8 are disposed in the recirculation passage 4. The circulation control valve 11 is opened when power generation is stopped. The recirculation blower 9 and cooler 8 are operated after power generation in the fuel cell stack 2 is stopped. The cooler 8 cools the recirculation gas emitted from the combustor 3 to remove water vapor. The recirculation blower 9 generates the flow of the recirculation gas. Water vapor in the recirculation gas is separated and removed as water and subsequently drained through a drain pipe (not shown). The recirculation blower 9 operates when power generation operations in the fuel cell stack 2 are stopped and transfers recirculation gas from which a part of moisture has been removed by the action of the cooler 8 to the reforming section 5 of the reformer 1. The circulation control valve 11 is closed during power generation operations in the fuel cell stack 2 and is opened in order to connect the recirculation passage 4 when power generation operations in the fuel cell stack 2 are stopped.

The operation of the fuel cell stack 2, the discharge valve 10, the circulation control valve 11, the recirculation blower 9 and the cooler 8 are controlled by a controller 15. The controller 15 comprises a microcomputer having a central processing unit (CPU) for running programs, read-only memory (ROM) for storing programs and data, random access memory (RAM) for temporarily storing data acquired as computing results from the CPU, and an input/output interface (I/O interface). The controller 15 may comprise a plurality of microcomputers.

The operation of a fuel cell system having the above construction will be described below.

When the fuel cell stack 2 is operating normally, the circulation control valve 11 is closed, i.e. the recirculation passage 4 is blocked, the recirculation blower 9 and the cooler 8 are not operated, and the discharge valve 10 is opened. Reformate gas containing hydrogen is generated in the reforming section 5 of the reformer 1 by reformate reactions between supplied fuel and air/water (at least one of air and water). In this embodiment, the reformate reactions in the reforming section 5 are autothermal reformate reactions occurring simultaneously with oxidizing reformate reactions and steam reformate reactions. When methanol is used as a fuel, the steam reformate reaction is an endothermic reaction as expressed in Equation (1).

$$CH_3OH + H_2O \rightarrow CO_2 + 3H_2 \qquad (1)$$

The oxidizing reaction is an exothermic reaction as expressed in Equation (2).

$$CH_3OH + (1/2)O_2 \rightarrow CO_2 + 2H_2 \qquad (2)$$

Methanol decomposition reactions as shown in Equation (3) or reverse shift reactions as shown in Equation (4) below occur in the reforming section 5 as side reactions.

$$CH_3OH \rightarrow CO+2H_2 \qquad (3)$$

$$CO_2+H_2 \rightarrow CO+H_2O \qquad (4)$$

For this reason, there is a small amount of carbon monoxide produced in the reforming section 5.

In the shift reactor 6 which removes carbon monoxide, water and carbon monoxide are reacted in order to produce hydrogen and carbon dioxide. In the carbon monoxide selective oxidizer 7 which removes carbon monoxide, reformate gas is mixed with air. Consequently carbon monoxide in the reformate gas is selectively oxidized with oxygen in the air. The shift reactor 6 and the carbon monoxide selective oxidizer 7 reduce the concentration of carbon monoxide to a level of 40 - 70 ppm.

The fuel cell stack 2 is supplied with air and reformate gas and generates electrical power using electro-chemical reactions. The combustor 3 combusts residual hydrogen in the discharge gas from the fuel cell stack 2 using supplied air. After power generation in the fuel cell stack 2 is stopped, the supply of water and fuel to the reformer 1 is stopped and the discharge valve 10 is closed. Conversely the circulation control valve 11 is opened, i.e. the recirculation passage 4 is opened, and the recirculation blower 9 and the cooler 8 are operated.

After power generation in the fuel cell stack 2 is stopped, residual gas in the reformer 1 is transferred to the combustor 2 through the fuel cell stack 2. Combustible gases such as hydrogen and carbon monoxide in the residual gas are partially combusted and recirculation gas (discharge gas) from the combustor 3 flows into the recirculation passage 4. In the recirculation passage 4, the recirculation gas is aspirated into the recirculation blower 9 through the cooler 8 and transferred to the reforming section 5 of the reformer 1 through the circulation control valve 11. The recirculation gas discharged from the combustor 3 is cooled by passing through the cooler 8 and water vapor in the recirculation gas is separated and removed from the recirculation gas. Thus discharge gas flows into the reforming section 5 in a dried state. The recirculation gas is circulated through the reformer 1, the fuel cell stack 2, the combustor 4, the recirculation passage 4.

Combustible components such as hydrogen, carbon monoxide, and hydrocarbons is gradually converted from to water and inactive gas (i.e. $CO_2$) by combustion in the combustor 3. The conversion reaction in the combustor 3 is expressed in Equations (5) - (7) below.

$$CO+(1/2)O_2 \rightarrow CO_2 \qquad (5)$$

$$CH_4 +2O_2 \rightarrow CO_2+2 H_2O \qquad (6)$$

$$H_2+(1/2)O_2 \rightarrow H_2O \qquad (7)$$

Thus, after power generation in the fuel cell stack 2 is stopped, the combustible gas in each reactor is removed by combustion. The recirculation gas may be circulated in a predetermined time period until the combustion of all combustible gas in the recirculation gas is completed, where the predetermined time period can be experimentally determined. Water produced by the conversion reaction is separated and removed by the cooler 8 while the gas is recirculating. The humidity is gradually reduced by gradually removing moisture (water vapor) in the recirculation gas supplied to the reformer 1. The conversion reaction in the combustor 3 occurs continuously as a result of the operation of the recirculation blower 9.

Due to the existence in the reformer 1 of recirculation gas from which moisture has been removed, liquid water can be prevented from adhering to the catalyst after stopping power generation in the fuel cell stack 2. Thus it is possible prevent deterioration of the catalyst as a result of moisture attachment. Combustion of the combustible gas in the recirculation gas is repeated and achieves complete combustion of all combustible gas. Consequently the reformer 1 is filled with inactive gas comprising carbon monoxide.

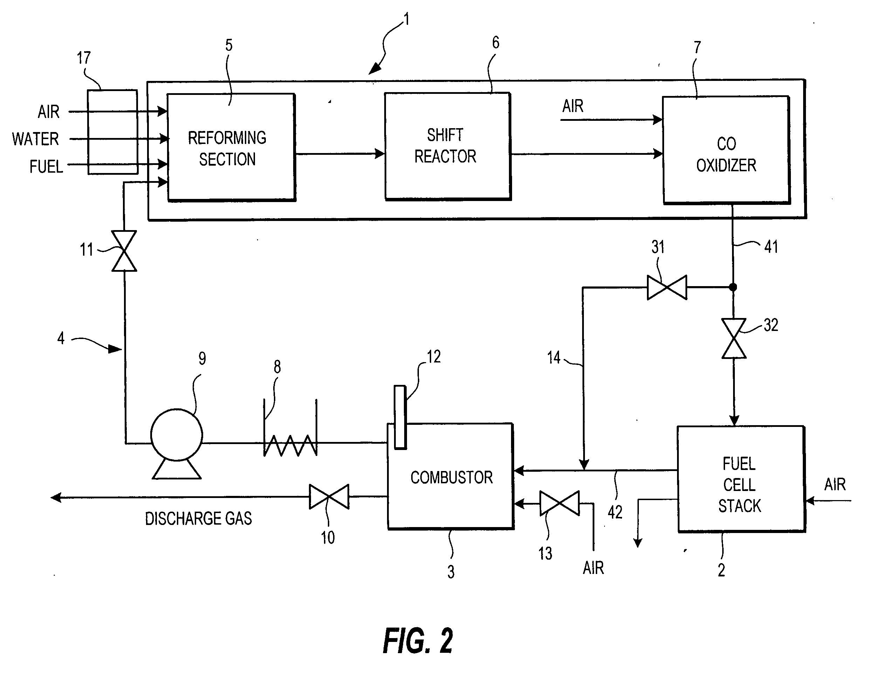

Referring to FIG. 2 to FIG. 4, a second embodiment of a fuel cell system applying this invention will be described. In this embodiment, the combustor 3 is temperature-controlled and the fuel cell stack 2 is separated from the route taken by the recirculation gas. Those components which are the same or similar to FIG. 1 are designated by the same reference numerals and additional description will be omitted.

In FIG. 2, an air valve 13 and a temperature sensor 12 are provided for the combustor 3. The air valve 13 regulates the supply amount of air for combustion. The temperature sensor 12 detects the temperature of the combustor 3 and inputs a temperature signal to the controller 15. The opening of the air valve 13 is controlled in response to commands from the controller 15. The air valve 13 is gradually opened when the temperature of the combustor 3 falls below a maximum permitted temperature and gradually closed when the temperature exceeds a maximum permitted temperature. When the temperature of the combustor 3 starts to fall, the controller 15 determines that the combustion of combustible gas in the combustor 3 is completed and completely closes the air valve 13.

A bypass passage 14 bypasses the fuel cell stack 2 and supplies gas from the reformer 1 directly to the combustor 3. The bypass passage 14 branches from the passage 41 connecting the reformer 1 and the fuel cell stack 2 and is connected to a passage 42 connecting the combustor 3 and the fuel cell stack 2. A bypass control valve 32 is provided immediately upstream of the inlet for the fuel cell stack 2 and a bypass control valve 31 is provided in the bypass passage 14. This allows the direction of gas flow from the reformer 1 to be directed to the bypass passage 14 or to the fuel cell stack 2. The bypass control valves 31, 32 may be integrated into a single directional control valve for controlling the direction of gas flow. The controller 15 closes the bypass control valve 31 and opens the bypass control valve 32 during normal operation of the fuel cell stack 2. When the fuel cell stack 2 is not operated, the controller 15 opens the bypass control valve 31 and closes the bypass control valve 32.

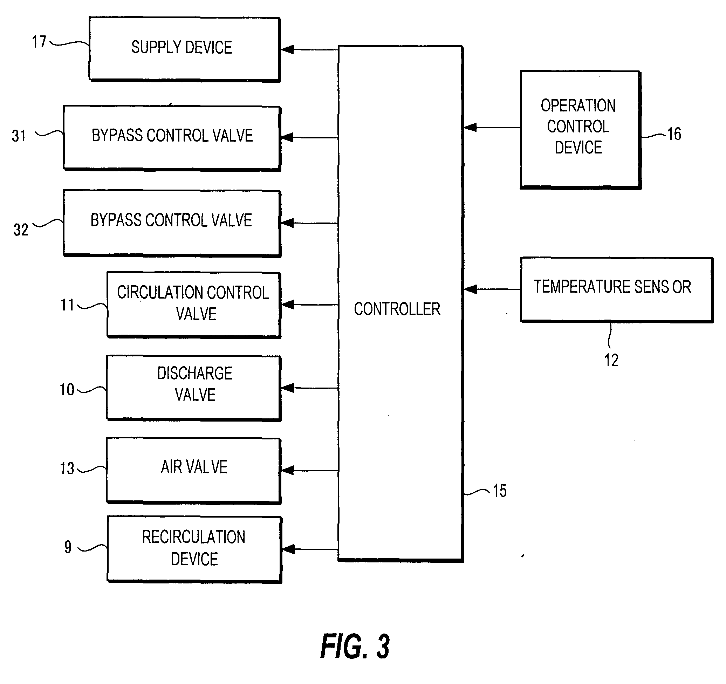

Referring to FIG. 3, a temperature signal from the temperature sensor 12 in the combustor 3 and an operation mode signal for the fuel cell system are inputted from the operation control device 16 to the controller 15. The operation control device 16 may comprise a control panel used by a user of the fuel cell system. The user can select the operation mode (normal operation mode or operation-stop mode) of the fuel cell system using the operation control device 16. In the normal operation mode, the fuel cell stack performs power generation. In the operation-stop mode, the fuel cell stack does not perform power generation and the fuel cell system performs a shutdown operation. The user who does not intend to use the fuel cell system may select the operation-stop mode. Further, the operation control device 16 may be a switch having an ON position corresponding to the normal-operation mode and an OFF position of corresponding to the operation-stop mode. In this case, the controller 15 detects the ON/OFF position of the switch.

Furthermore the controller 15 controls the air valve 13, the discharge valve 10, the circulation control valve 11, the bypass control valves 31, 32, and the supply device 17 which controls the supply of air, water and fuel to the reformer 1 in response to the operation mode. The supply device 17 may comprise a valve for controlling the flow amount of air supply to the reformer 1, a valve for controlling the flow amount of water supplied to the reformer 1 and a valve for controlling the flow amount of fuel supplied to the reformer 1. If the reforming section 5 performs only one of the oxidizing reformate reaction and steam reformate reaction, it is not necessary for the supply device 17 to have both of the valve for controlling the flow amount of air supply and valve for controlling the flow amount of water.

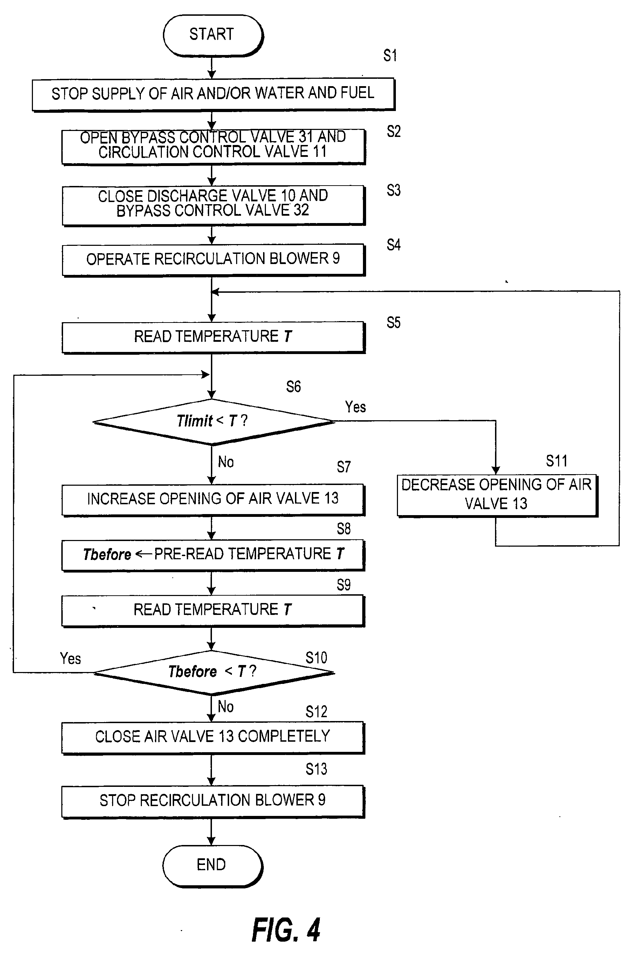

The flowchart shown in FIG. 4 shows a control routine executed by the controller 15 when the operation-stop mode is selected. Referring to the flowchart shown in FIG. 4, control for the fuel cell system in the operation-stop mode will be described.

In this flowchart, steps S1 to S4 show preparatory steps for stopping operation of the fuel cell system. Steps S5, S6, S11 are temperature control steps for the combustor 3. Temperature control in the combustor 3 is used in order to process combustible gas present in the recirculation gas without damaging the combustor 3. Steps S7 to S10 determine whether or not uncombusted components remain in the recirculation gas. Steps S12 and S 13 are final processing steps.

In the step S1, the supply device 17 is controlled to stop the supply of air and/or water and fuel to the reformer 1. In the step S2, the bypass control valve 31 and the circulation control valve 11 are opened. In the step S3, the discharge valve 10 and the bypass control valve 32 are closed. In the step S4, the recirculation blower 9 and the cooler 8 are operated.

Thus reformate gas from the reformer 1 does not flow into the fuel cell stack 2 but is supplied to the combustor 3 via the bypass passage 14. Recirculation gas is then supplied to the reformer 1 via the cooler 8, the recirculation blower 9 and the circulation control valve 11 in the recirculation passage 4. The combustor 3 converts recirculation gas to carbon dioxide. On the other hand, the cooler 8 removes water vapor contained in the recirculation gas of the recirculation passage 4.

In the step S5, the temperature $T$ of the combustor 3 is read by using the temperature sensor 12 and is stored in the RAM. In the step S6, it is determined whether or not the detected temperature $T$ of the combustor 3 is greater than the maximum permitted temperature $Tlimit$ of the combustor 3. When the temperature $T$ of the combustor 3 is smaller than the maximum permitted temperature, the routine progresses to the step S7. When the temperature $T$ of the combustor 3 is greater than the maximum permitted temperature, the routine progresses to the step S11.

In the step S11, the air valve 13 is closed by a predetermined amount, and then the routine returns to the step S5. The supplied air amount is decreased by decreasing the opening of the air valve 13 so as to reduce the level of combustion in the combustor 3. Thus it is possible to keep the temperature of the combustor 3 below the maximum permitted temperature. If the temperature of the combustor 3 exceeds the maximum permitted temperature, the operation of the combustor 3 undergoes an abnormality.

In the steps S7 to S10, it is determined whether or not the combustion temperature of the combustor 3 increases in response to an increase in the supplied air amount to the combustor 3. This enables a judgment about the existence/ absence of combustible components in the recirculation gas in an indirect manner. After the combustion of all combustible gas is completed, resulting in the absence of the combustible components in the recirculation gas, the temperature of the combustor 3 detected by the temperature sensor 14 decreases.

In the step S7, the opening of the air valve 13 is increased by a predetermined amount and the supplied air amount to the combustor 3 is increased in order to promote combustion in the combustor 3. In the step S8, the latest data of temperature *T* (which has been read in the step S5 or S9) is assigned to a variable *Tbefore* as a previous temperature. In the step S9, the current temperature of the combustor 3 is read and is stored in the RAM. In the step S10, it is determined whether or not the current temperature *T* is higher than the previous temperature *Tbefore.*

When the temperature *T* of the combustor 3 is higher than the previous temperature *Tbefore* as a result of an increase in the supplied air amount in the step S7, the routine returns to the step S6 because there are uncombusted components in the circulation gas. When the temperature *T* of the combustor 3 is lower than the previous temperature *Tbefore,* the routine returns to the step S12 because there are no uncombusted components in the recirculation gas.

In the step S12, the air valve 13 is completely closed, setting the opening of the air valve 13 to zero. In the step S 13, the operation of the recirculation blower 9 and the cooler 8 is stopped. At this point, all operation of the fuel cell system has been stopped.

In the second embodiment, the fuel cell stack 2 is separated from the flow of recirculated gas. As a result, after stopping the power generation, there is the possibility that residual moisture or oxygen will reduce the performance of the electrode catalyst in the fuel cell stack 2.

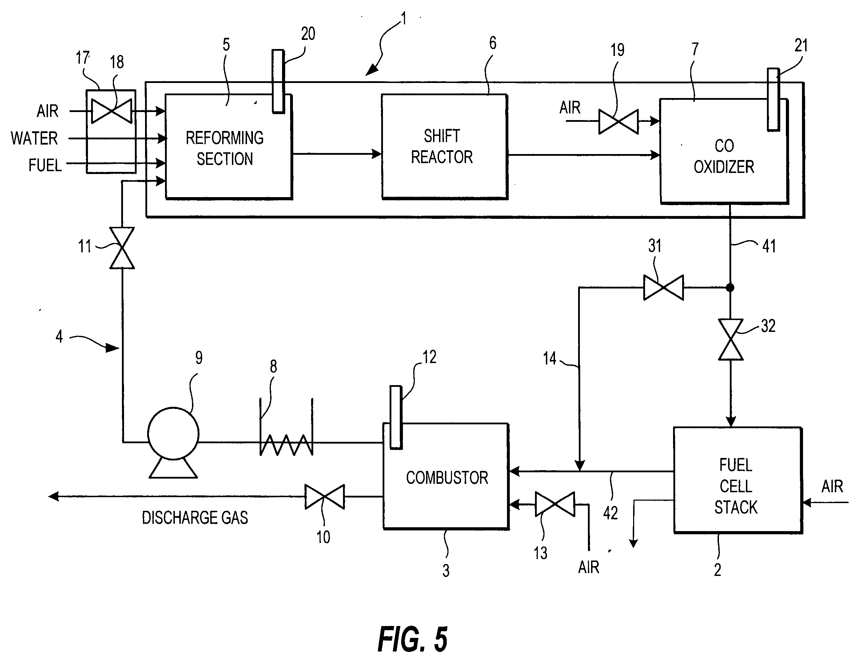

FIG. 5 shows a third embodiment of a fuel cell system applying this invention. Referring to FIG. 5, in the third embodiment, oxidation of combustible gas is performed in the respective oxidation reactors of the reformer 1 in addition to the combustor 3. Those components which are the same as those in FIG. 1 and FIG. 2 are designated by the same reference numerals and additional description is omitted.

Air and recirculation gas are supplied to the reforming section 5 and carbon monoxide selective oxidizer 7 of the reformer 1 after the operation of the fuel cell stack is stopped. Air valves 18, 19 are provided in the air supply passages to the carbon monoxide selective oxidizer 7 and the reforming section 5. A temperature sensor 20 is disposed in the reforming section 5 and a temperature sensor 21 is disposed in the carbon monoxide selective oxidizer 7. The temperature in the reforming section 5 and the temperature in the carbon monoxide selective oxidizer 7 are respectively detected by the temperature sensors 20, 21. The controller 15 controls the flow amount of supplied air by regulating the opening of the air valve 18, 19 so that the temperature of the reforming section 5 and the carbon monoxide selective oxidizer 7 do not exceed the respective maximum permitted temperature.

Thus it is possible to perform rapid oxidation of recirculation gas by combusting combustible gas not only in the combustor 3 but also in the reforming section 5 and the carbon monoxide selective oxidizer 7. In this manner, it is possible to rapidly oxidize combustible gas without damaging the reforming section 5 or the carbon monoxide selective oxidizer 7.

Although the invention has been described above by reference to certain embodiments of the invention, the invention is not limited to the embodiments described above. In the above embodiments, the combustor 3 is a combustor allowing combustion of hydrogen discharged from the fuel cell stack 2. However the combustor 3 may be a combustor used for warm-up operations during startup of the fuel cell system. Furthermore the combustor 3 may be a burner combustor for combusting fuel or a catalytic combustor for catalytic combustion of hydrogen.

Modifications and variations of the embodiments described above will occur to those skilled in the art, in light of the above teachings. The scope of the invention is defined with reference to the following claims.

The entire contents of Japanese Patent Application P2002-265254 (filed September 11, 2002) is incorporated herein by reference.

## Claims

1.  A fuel cell system having a reformer (1) for generating a reformate gas containing hydrogen from fuel and water/ air, a fuel cell stack (2) for generating electric power as a result of supply of reformate gas, a combustor (3) for combusting combustible gas introduced into the combustor (3), a passage (41) for connecting the reformer (1) and the fuel cell stack (2), and a passage (42) for connecting the fuel cell stack (2) and the combustor (3), the fuel cell system comprising:

    a recirculation passage (4) connecting the reformer (1) and the combustor (3) so as to allow a flow of the gas discharged from the combustor (3) to the reformer (1);
    a recirculation device (9) for recirculating gas discharged from the combustor (3) through the recirculation passage (4) and the reformer (1);
    a supply device (17) for controlling a supply of fuel and water/ air to the reformer (1);
    a device (16) for selecting an operation mode of the fuel cell system from a group including a normal operation mode in which the fuel cell stack (2) performs power generation and a stop mode in which the fuel cell stack (2) does not perform power generation; and
    a controller (15) for controlling the supply device (17) and the recirculation device (9) in response to the operation mode of the fuel cell system, the controller functioning to
    control the supply device (17) to stop the supply of fuel and water/ air to the reformer (1) in the stop mode; and

subsequently control the recirculation device (9) to recirculate the discharged gas from the combustor (3) through the recirculation passage (4) and the reformer (1).

2. The fuel cell system as defined in Claim 1, further comprising a circulation control valve (11) for opening and closing the recirculation passage (4), a discharge line allowing flow of the discharged gas from the combustor (3) to the outside of the combustor (3) and a discharge valve (10) disposed on the discharge line;

wherein the recirculation device (9) comprises a blower (9) disposed in the recirculation passage (4) for generating a flow of the discharged gas from the combustor (3) to the reformer (1);

and wherein the controller (15) functions to close the discharge valve (10), open the circulation control valve (11) and operate the blower (9) in the stop mode.

3. The fuel cell system as defined in Claim 1 or Claim 2, further comprising a cooler (8) for removing moisture included in the discharged gas from the combustor (3), the cooler (8) is disposed on the recirculation passage (4).

4. The fuel cell system as defined in any one of Claim 1 to Claim 3, further comprising a sensor (12) for detecting the temperature of the combustor (3) and sending a corresponding signal to the controller (15);

wherein the controller (15) functions to control the temperature of the combustor (3) to less than a maximum permitted temperature based on the signal from the sensor (12);

and wherein the combustor (3) transfers the discharged gas to the recirculation passage (4) after combusting at least a portion of the combustible gas contained in the recirculating gas.

5. The fuel cell system as defined in Claim 4, further comprising an air valve (13) for introducing air into the combustor (3),

wherein the controller (15) functions to control the opening of the air valve (13) in response to the temperature of the combustor (3).

6. The fuel cell system as defined in Claim 2, further comprising a sensor (12) for detecting the temperature of the combustor (3) and sending a corresponding signal to the controller (15) and an air valve (13) for introducing air into the combustor (3),

wherein the controller (15) functions to control the air valve (13) so that air is not introduced into the combustor (3) and stop the action of the blower (9) when the temperature of the combustor (3) starts to fall.

7. The fuel cell system as defined in Claim 2, wherein the controller (15) functions to determine whether or not combustible gas is present in the recirculating gas and stop the blower (9) when it is determined that there is no combustible gas in the recirculation gas.

8. The fuel cell system as defined in any one of Claim 1 to Claim 6, wherein

the reformer (1) comprises a carbon monoxide removal section (7) and a reforming section (5) which are supplied air to combust combustible gas contained in the discharged gas from the combustor (3), and an air valve ( 19) for regulating the air amount supplied to the carbon monoxide removal section (7);

the supply device (17) comprises an air valve (18) for regulating the air amount supplied to the reforming section (5), and

the controller (15) functions to control the air valve (19) for the carbon monoxide removal section (7) and the air valve ( 18) for the reforming section (5) in the stop mode so that the temperature of the reforming section (5) and the carbon monoxide removal section (7) is smaller than their respective maximum permitted temperatures.

9. The fuel cell system as defined in any one of Claim 1 to Claim 7, further comprising a bypass passage (14) for directly transferring gas from the reformer (1) to the combustor (3) by bypassing the fuel cell stack (2) and a directional control valve (31,32) for selecting the direction of gas flow from the reformer (1) either to the bypass passage (14) or to the fuel cell stack (2); wherein, in the stop mode, the controller functions to control the directional control valve (31,32) so that the gas from the reformer (1) flows to the bypass passage (14).

10. A control method for controlling a fuel cell system, the fuel cell system having a reformer (1) for generating a reformate gas containing hydrogen from fuel and water/ air, a fuel cell stack (2) for generating electric power as a result of supply of reformate gas, a combustor (3) for combusting combustible gas introduced into the combustor (3), a passage (41) for connecting the reformer (1) and the fuel cell stack (2), a passage (42) for connecting the fuel cell stack (2) and the combustor (3), and a recirculation device (9) for recirculating gas discharged from the combustor (3) through the recirculation passage (4) and the reformer (1),

the method comprising the steps of:

selecting an operation mode of the fuel cell system from a group including a normal operation mode in which the fuel cell stack (2) performs power generation and a stop mode in which the fuel cell stack (2) does not perform power generation; and

stopping the supply of fuel and water/ air to the reformer (1) in the stop mode; and subsequently recirculating the discharged gas from the combustor (3) through the recirculation passage (4) and the reformer (1).

**FIG. 1**

FIG. 2

EP 1 398 843 A2

**FIG. 3**

START

S1
STOP SUPPLY OF AIR AND/OR WATER AND FUEL

S2
OPEN BYPASS CONTROL VALVE 31 AND
CIRCULATION CONTROL VALVE 11

S3
CLOSE DISCHARGE VALVE 10 AND
BYPASS CONTROL VALVE 32

S4
OPERATE RECIRCULATION BLOWER 9

S5
READ TEMPERATURE $T$

S6
$Tlimit < T$ ?

Yes → S11
DECREASE OPENING OF AIR
VALVE 13

No

S7
INCREASE OPENING OF AIR VALVE 13

S8
$Tbefore \leftarrow$ PRE-READ TEMPERATURE $T$

S9
READ TEMPERATURE $T$

S10
$Tbefore < T$ ?

Yes

No

S12
CLOSE AIR VALVE 13 COMPLETELY

S13
STOP RECIRCULATION BLOWER 9

END

**FIG. 4**

**FIG. 5**

EP 1 398 843 A2